# EUROPEAN PATENT APPLICATION

(11) **EP 1 170 708 A2**
(43) Date of publication of application: **09.01.2002**
(21) Application number: 01115839.1
(22) Date of filing: 28.06.2001
(51) Int. Cl.: G07G 1/14, G06F 17/60

(54) **Purchase data acquiring/utilizing system**

(30) Priority: 04.07.2000 JP 2000202841
(71) Applicant: JB to B Co., Ltd., Tokyo 104-8446 (JP)
(72) Inventor: Manabe, Toshiyuki, Fujisawa-shi, Kanagawa-ken 251-0047 (JP); Kaneko, Kiyoshi, 6-9-11, Minami-Nagaski, Tokyo 171-0052 (JP)
(74) Representative: Goddar, Heinz J., Dr.

(57) **Abstract**

An purchase data acquiring/utilizing system of open system which collects commodity purchase information of each customer so that the desired analysis result and counting result based on the information can be easily and promptly acquired and utilized bythepoint-of-saleretailerorthelike. A server system receives and stores purchase data on a commodity and a purchase header for identifying the attributes with respect to the purchase data, via a communication network from a client system installed at the point-of-sale retailer or on the customer side. A desired kind of analysis is performed based on the detailed data of the attributes saved in advance, and the data thus received and stored. A corresponding order identifier is generated for each analysis result. The client system or a display computer connected to the communication network is given an authority to access to the analysis result stored in a predetermined file format, by the order identifier notified individually.

## Description

### Background of the Invention

### Field of the Invention

This invention relates to a purchase data acquiring/utilizing system. More particularly, this invention pertains to a system for collecting purchase information on commodities with respect to each customer, so that a desired analysis result or counting result on the basis of the commodity purchase information can be easily and promptly acquired and utilized by a point-of-sale retailer, a purchaser or a producer.

### Description of the Prior Art

As an information system capable of collecting, registering and accumulating the sales information of individual commodities at a retail shop for a variety of analyses, a point-of-sale information management system (POS system) is known. The conventional POS system is a system based on the sales information of the commodities mainly at the retail shop. In the conventional POS system, by sharing the sales information with wholesale dealer and the producer, fast-moving consumer goods (commodities having a large sale) or slow-moving consumer goods (commodities having a poor sale) are grasped so that commodities can be supplied efficiently without giving rise to overstocking or out of commodities. Consequently, a flow of the commodity distribution is made efficient, thereby assisting in reducing the cost and increasing the sales.

The conventional POS system comprises a POS terminal installed at a retail shop and having a bar code reader or scanner, and a store controller connected to the POS terminal. In a larger-scale POS system, the store controller may be further connected to a host computer of the head office. On the basis of the sales information of each commodity, the store controller or the host computer at the head office performs predetermined data processing. In such POS system, retail shops also share the commodity information. However, the information services to be utilized by the retail shops are generally restricted to a certain extent such as the sales information of the individual commodities and the order information based on the stock management.

### Summary of the Invention

Therefore, an object of the invention is to provide a purchase data acquiring/utilizing system of open system, which collects the commodity purchase information of each customer so that a desired analysis result and a counting result, as obtained on the basis of the commodity purchase information, can be easily and promptly acquired and utilized by the point-of-sale retailer, the purchaser or the producer.

In order to achieve the above object, the purchase data acquiring/utilizing system according to the present invention includes a client installed at least at a point-of-sale retailer in the case where a commodity is sold to a customer or on the customer side in the case where the commodity is sold on a non-store retailing basis; and a server system for receiving purchase data on the commodity together with a purchase header for identifying attributes with respect to the purchase data, from the client system via a communication network, the server system comprising: an attribute database system for saving in advance with details of attributes corresponding to the purchase header; a purchase data storage region for storing the purchase data and the purchase header output from the client system; a purchase data analyzing system for performing a desired kind of analysis on the basis of the data registered in the attribute database system and the data stored in the purchase data storage region and for generating an order identifier corresponding to each desired analysis result; and an analysis result storage region for storing the analysis result in a predetermined file format; wherein the server system individually notifies the client system or a display computer connected to the communication network of an order identifier corresponding to the each desired analysis result, thereby authorizing an access to the analysis result. Here, it is preferable that the purchase data are data relating to purchase time, purchase quantity and/or purchase price of the commodity; the purchase header is a header for identifying point-of-sale attributes, purchaser attributes and purchase item attributes; details of the point-of-sale attributes, details of the purchaser attributes and details of the purchase item attributes corresponding to the purchase header are saved in the attribute database system.

Further, the purchase data acquiring/utilizing system according to the present invention may be configured such that the server system further comprises: a related data counting system for count data accumulated on a specific customer for a predetermined time period under desired conditions for collection on the basis of the data stored in the purchase data storage region to convert the counted data into points, and further generating a summary identifier corresponding to each desired counting result; and a count result storage region for storing the counting result converted into the points; wherein the server system individually notifies the client system or the display computer connected to the communication network of the summary identifier corresponding to the each desired counting result, thereby authorizing an access to the counting result. Here, it is preferable that the accumulated data are data which are collected on the basis of any of a purchase sum of money, a purchase result at a specific point-of-sale retailer and a purchase quantity of specific items on the specific purchaser for a predetermined time period.

The client system or the display computer may be configured so as to transmit data of a desired analysis condition arbitrarily input by a user to the server system; and the server system performs a desired analysis under the analysis condition received. Further, the client system or the display computer may be configured so as to transmit data of a desired counting condition which are arbitrarily input by a user to the server system; and the server system performs a desired count under the counting condition received.

### Brief Description of the Drawings

The invention will be explained in more detail in conjunction with appended drawings, wherein:
Fig. 1 is a diagram showing an overall configuration of a purchase data acquiring/utilizing system according to a preferred embodiment of the present invention;
Fig. 2 is an explanatory view showing an example of operations of the purchase data acquiring/utilizing system shown in Fig. 1;
Fig. 3 is a view showing an example of an analysis result acquired at a point-of-sale retailer;
Fig. 4 is a view showing another example of the analysis result acquired at the point-of-sale retailer;
Fig. 5 is a view showing still another example of the analysis result acquired at the point-of-sale retailer; and
Fig. 6 is an explanatory view showing another example of the operations of the purchase data acquiring/utilizing system shown in Fig. 1.

### Detailed Description of the Preferred Embodiments

Referring to drawings, preferred embodiments of the present invention will be described below.

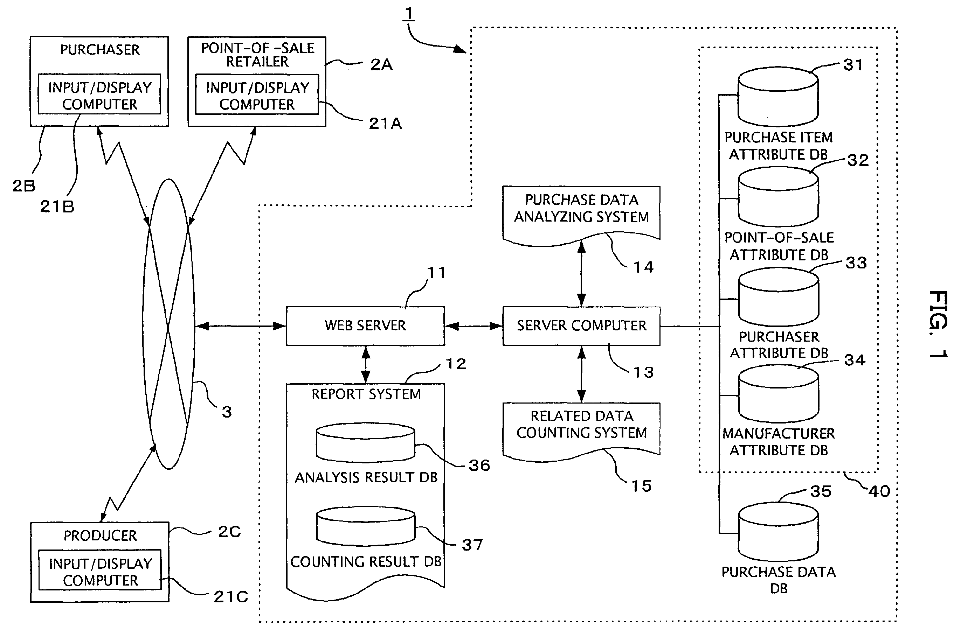

Fig. 1 shows an overall configuration of a purchase data acquiring/utilizing system according to a preferred embodiment of the present invention. The purchase data acquiring/utilizing system comprises a server system 1; client systems 2A, 2B and 2C which are installed at a point-of-sale retailer (e.g., a retail shop of a retailer), a purchaser (e.g., a member customer of the retailer or the retail shop) and a producer (e.g., a producer of a commodity or a business contact of the retailer), respectively, and used by those respective subjects; and a communication network 3 such as the Internet which is realized by utilizing a public line network or private lines.

The client systems 2A, 2B and 2C are equipped with input/display computers 21A, 21B and 21C capable of operating input/display application programs such as a WEB browser, respectively. By operating the input/display computer 21A, 21B or 21C, the point-of-sale retailer, the purchaser or the producer is able to transmit a desired analysis condition or a desired counting condition to the server system 1 so as to request the server system 1 to provide an analysis result or a counting result.

The server system 1 is provided with a WEB server 11 connected to the communication network 3, a report system 12, a server computer 13, a purchase data analyzing system 14 and a related data counting system 15, and is further equipped with a purchase item attribute DB 31, a point-of-sale attribute DB 32, a purchaser attribute DB 33, a manufacturer attribute DB 34 and a purchase data DB 35.

The purchase item attribute DB 31, the point-of-sale attribute DB 32, the purchaser attribute DB 33 and the manufacturer attribute DB 34 constitute an attribute database system 40. The purchase item attribute DB 31 saves in advance data of item information of all commodities to be handled by the retailer, including item name information and item price information. The point-of-sale attribute DB 32 saves in advance data of information as to shops of the point-of-sale retailer, sales division information and selling floor information. The purchaser attribute DB 33 saves in advance data of information on the member customer (purchaser) of the retailer including sexes, ages or generations (e.g., teens or twenties), and addresses or market areas. Further, the manufacturer attribute DB 34 saves in advance producer information of the commodities to be sold (or the information of business contacts of the retailer).

From the client system 2A installed at the point-of-sale retailer in the case where a commodity is sold at a shop to the member customer (purchaser), or from the client system 2B installed on the member customer (purchaser) side in the case where the commodity is sold to the member customer in response to an offer of purchase through the communication network by the member customer, the data on the purchase time and the purchase quantity of the commodity (the purchase data) are transmitted together with the header for identifying the point-of-sale attributes, the purchaser attributes and the purchase item attributes of the commodity (the purchase header) to the server system 1 via the communication network. Especially in the former case of the client system 2A installed at the point-of-sale retailer, the client system 2A can acquire the purchase data and the purchase header from another sales information management system such as a POS system and transmit them to the server system 1.

When the member customer (the purchaser) purchases a commodity, the purchase data and the purchase header are transmitted from the client system 2A or 2B via the communication network 3 to the server system 1 and stored in the purchase data DB 35.

Here, the WEB server 11 authenticates the client systems of each point-of-sale retailer, the member customer (the purchaser) and the producer, and examines the authorities of those client systems to access to the after-mentioned report system 12.

The server computer 13 manages an attribute database system 40 which comprises the purchase item attribute DB 31, the point-of-sale attribute DB 32, the purchaser attribute DB 33 and the manufacturer attribute DB 34, as well as the purchase data DB 35.

The purchase data analyzing system 14 acquires the data saved in the attribute database system 40 and the data stored in the purchase data DB 35 through the server computer 13; performs the desired analysis on the basis of those data; and generates an order identifier corresponding to each desired analysis result.

The related data counting system 15 acquires the data stored in the purchase data DB 35 through the server computer 13; counting the data accumulated on a specific member customer (a specific purchaser) for a predetermined time period under desired conditions on the basis of the acquired data; converts the counted data into points; and generates a summary identifier corresponding to each desired counting result.

The report system 12 is provided with an analysis result DB 36 and a counting result DB 37. The individual data of the desired analysis result output from the purchase data analyzing system 14 and the counting result output from the related data counting system 15 are stored in the analysis result DB 36 and the counting result DB 37, respectively. The data of the desired analysis result are input through the WEB server 11 into the report system 12, converted into a predetermined file format (e.g., HTML documents) and stored in the analysis result DB 36. Similarly, the data of the desired counting result are input through the WEB server 11 into the report system 12, converted into a predetermined file format (e.g., the HTML documents) and stored in the counting result DB 37.

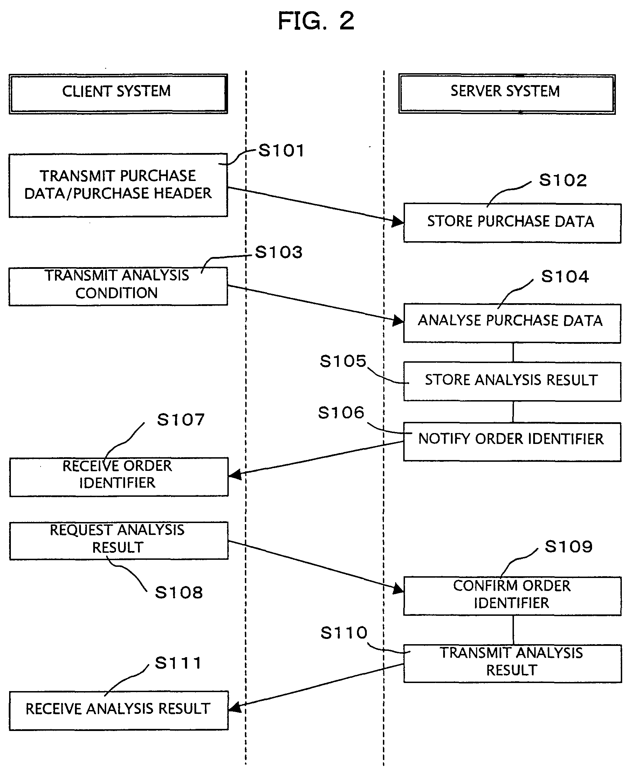

With reference to Figs. 1 and 2, here will be described an example of the operations of the purchase data acquiring/utilizing system thus configured. Assuming that a retailer having a plurality of retail shops utilizes the present system, as a first example, such a case where a desired analysis result is acquired in the client system 2A of the point-of-sale retailer (or retail shop) will be described below.

First of all, each time a customer purchases a commodity at the point-of-sale retailer, the purchase data and the purchase header of the purchased commodity are transmitted from the client system 2A via the communication network to the server system 1 (S101). The purchase data and the purchase header thus transmitted are received by the WEB server 11 and transferred to the server computer 13.

The server computer 13 refers to the purchase item attribute DB 31, the point-of-sale attribute DB 32 and the purchaser attribute DB 33 of the attribute database system 40, and correlates them to the identification information which is contained in the purchase header received. Then, the purchase data and the purchase header received are stored in the purchase data DB 35 (S102).

Where the analysis result is requested under a desired condition in the client system 2A of the point-of-sale retailer at a time on a date, the input/display computer 21A is operated at first to input the desired analysis condition and transmit it to the server system 1 (S103). The analysis condition thus transmitted is transferred through the WEB server 11 to the server computer 13 and further to the purchase data analyzing system 14. The purchase data analyzing system 14 operates the server computer 13 to retrieve the data matching with the analysis condition from the purchase data DB 35, performs the analysis and outputs the analysis result data (S104). The analysis result data output from the purchase data analyzing system 14 are input through the WEB server 11 into the report system 12, converted into a predetermined file format (e.g., the HTML documents) and stored in the analysis result DB 36 (S105).

On the other hand, the purchase data analyzing system 14 generates an order identifier corresponding to the analysis result. The server computer 13 notifies to the client system 2A at the point-of-sale retailer through the WEB server 11 of the order identifier (S106). The order identifier is generated so that the client system 2A is given an authority to access to the analysis result.

In the client system 2A, the input/display computer 21A is operated to input the order identifier thus notified on the WEB browser, thereby transmitting to the server system 1 the data requesting to provide the aforementioned analysis result (S108). Then, after the confirmation of the correctness of the order identifier, the WEB server 11 has the report system 12 operate to authorize the client system 2A to access to the file of the analysis result (e.g., the HTML documents) corresponding to the order identifier (S109). Thus, in response to the request of the client system 2A, the data of the analysis result are transmitted from the server system 1 to the client system 2A (S110). Consequently, the analysis result can be displayed by the WEB browser which is operated on the input/display computer 21A included in the client system 2A (S111).

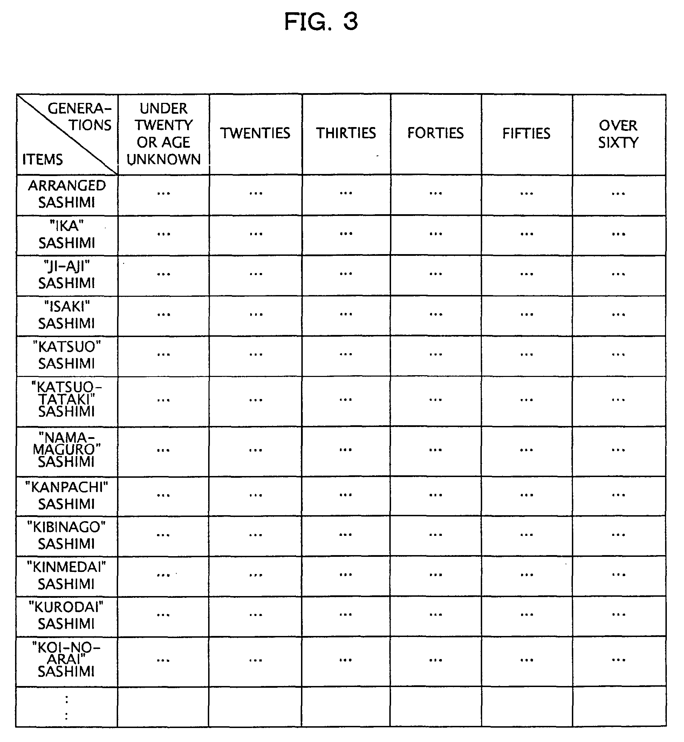

Fig. 3 shows an example of a primary analysis result of the case in which the purchase situations (the purchase quantity) of member customers for one month on the purchase item "aquatic products" at the aforementioned point-of-sale retailer are conditioned to extract separately by the product names among the purchase item attributes and the generations (which are individually divided into under twenty or age unknown, twenties, thirties, forties, fifties and over sixty) of the member customers (the purchasers). Although the descriptions of specific numerical values are omitted from Fig. 3, the point-of-sale retailer can learn, by acquiring the analysis results represented by this table form, what commodity of the "aquatic products" had been purchased by the member customers at its shop for that time period, and what generations the member customers belong to.

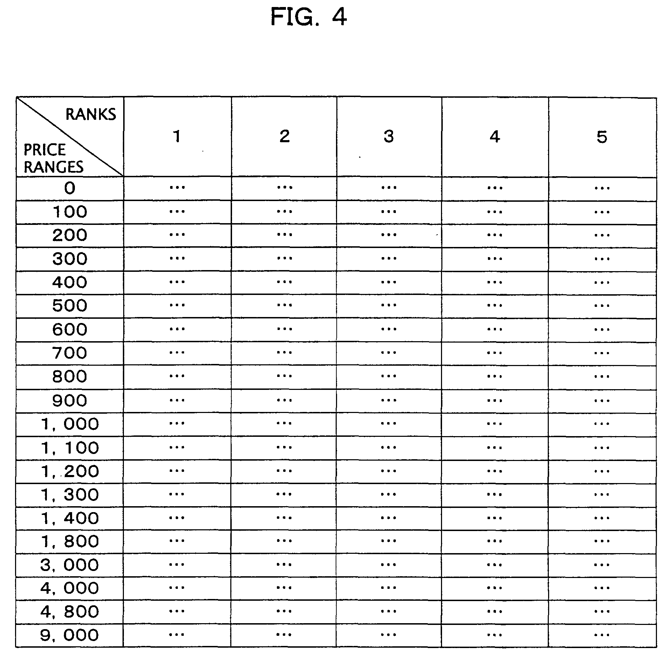

Fig. 4 shows an example of the secondary analysis result of the case in which the member customers are classified by the quantities of the commodities of "aquatic products" having purchased on the basis of the primary analysis result shown in Fig 3 into five ranks in descending order; the quantities of all the commodities including the aquatic products having purchased are counted in accordance with the ranks; the unit prices of purchase items are classified by the unit prices of about ¥100. Although the specific numerical values are omitted from Fig. 4, the point-of-sale retailer can learn, by acquiring the analysis result represented by this table form, what price range the classified member customers have purchased the commodities at its shop for that time period in correlation to the quantities of the "aquatic products" having purchased.

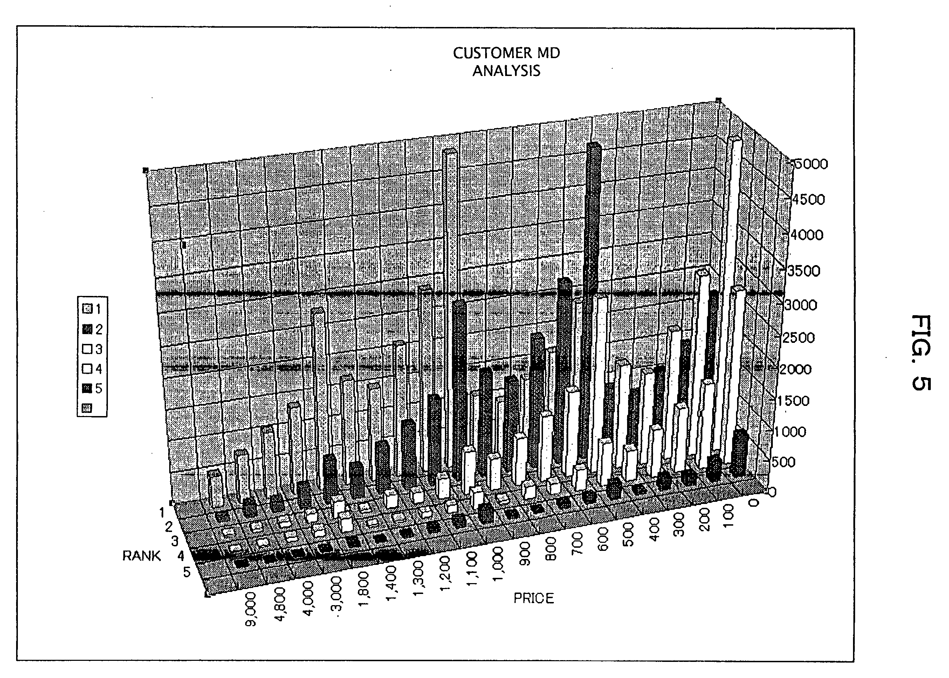

Fig. 5 is a histogram graphing the secondary analysis result shown in Fig. 4. By acquiring this result shown in Fig. 5, the point-of-sale retailer can learn at a glance that the member customer having purchased the larger quantity of aquatic products also have purchased the commodities of the higher unit price, as well as the aquatic products.

Thus, according to the purchase data acquiring/utilizing system of this embodiment, the point-of-sale retailer can easily and promptly acquire the detailed analysis results particular to the point-of-sale retailer from the server system so that the analysis results can be sufficiently exploited for planning and executing its customer marketing strategy and for grasping the results thereof.

Results similar to the aforementioned analysis results, as can be acquired at the client system 2A of the point-of-sale retailer, may also be acquired at the client system 2C of the producer. In this case, the producer having dealings with a number of point-of-sale retailers can acquire the detailed analysis results particular to the respective point-of-sale retailers, easily and promptly from the server system so that the analysis results can be sufficiently exploited for planning and executing not only the customer marketing strategy but also the commodity distribution strategy and for grasping the results thereof.

The foregoing embodiment has been described referring to the example where the user of the client system 2A operates the input/display computer 21A to input and transmit desired analysis conditions to the server system 1. However, the configuration may also be modified such that a plurality of standard analysis programs preset with desired analysis conditions are prepared and installed on the purchase data analyzing system 14 so that the desired analyses may be performed merely when the user of the client system 2A transmits a command to start the programs.

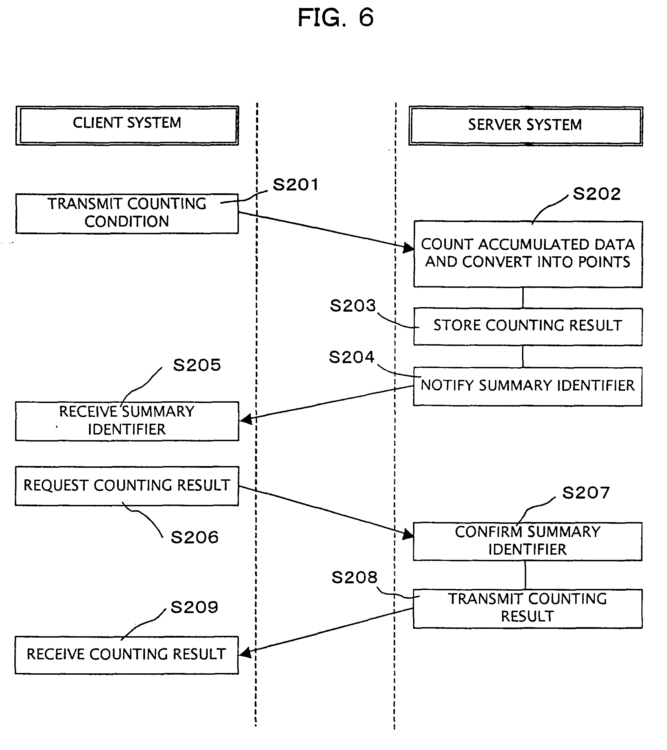

Here will be described another example of the operations of the purchase data acquiring/utilizing system according to another embodiment of the present invention. With reference to Fig. 6, such a case where the desired counting results are acquired in the client system 2A of the point-of-sale retailer or the client system 2B of the purchaser will be described below.

With regard to the commodity purchased by the customer, as has been described hereinbefore, the purchase data and the purchase header have been transmitted from the client system 2A or 2B via the communication network 3 to the server system 1, and have been stored in the purchase data DB 35.

The operations in the case where the point-of-sale retailer or the customer requests the counting results under the desired conditions at a time on a date, are as follows.

First of all, in the client system 2A or 2B, the input/display computer 21A or 21B is operated to input and transmit the desired counting condition to the server system 1 (S201). The counting condition thus transmitted is transferred through the WEB server 11 to the server computer 13 and further to the related data counting system 15. The related data counting system 15 operates the server computer 13 to count data from the purchase data DB 35 accumulated on the specific purchaser for a predetermined time period under desired conditions for collection to convert the counted data into points, and to output the counting result data (S202). The counting result data output from the related data counting system 15 are input through the WEB server 11 into the report system 12, converted into a predetermined file format (e.g., the HTML documents) and stored in the counting result DB 37 (S203).

On the other hand, the related data counting system 15 generates a summary identifier corresponding to the counting result. The server computer 13 notifies the client system 2A of the point-of-sale retailer or 2B of the purchaser of the summary identifier through the WEB server 11 (S204). The summary identifier is generated in order to give the client system 2A or 2B an authority to access to the counting result.

In the client system 2A or 2B, the input/display computer 21A or 21B is operated to input the summary identifier thus notified on the WEB browser, thereby transmitting the data requesting to provide the aforementioned counting result to the server system 1 (S206). Then, after the confirmation of the correctness of the summary identifier, the WEB server 11 operates the report system 12 to authorize the client system 2A or 2B to access to the file of the counting result (e.g., the HTML documents) corresponding to the summary identifier and stored in the counting result DB 37 (S207). Thus, in response to the request of the client system 2A or 2B, the data of the counting result are transmitted from the server system 1 to the client system 2A or 2B (S208). Consequently, the counting result can be displayed by the WEB browser which is operated on the input/display computer 21A or 21B included in the client system 2A or 2B (S209).

The counting result, as thus acquired by the client system 2A or 2B, contains the point information which is converted on the basis of the accumulated data of the predetermined time period on the specific customer. Therefore, the point-of-sale retailer A or the purchaser B can, by utilizing the counting result, obtain the following concrete and useful results.

First of all, as to the point-of-sale retailer, the retailer can automatically acquire such basic data, by the present purchase data acquiring/utilizing system, as can provide the so-called "point redeem services" to discount the purchase price at a predetermined ratio according to the points for the specific customer, or to provide commodities according to the points without charge to the specific customer. Therefore, this counting result can be utilized for the highly value-added services to bring about commodity purchasing inclination of the customer.

As to the purchaser, on the other hand, it is possible to confirm arbitrarily the accumulated points of the purchaser from the acquired counting result, so that the counting result can be exploited as the basic data for utilizing such point redeem services provided at retail shops or through the Net shopping.

In the embodiments described above, the input/display computer 21A, 21B or 21C is neither necessarily integrated with each client system 2A, 2B or 2C nor physically installed at the shop of the point-of-sale retailer, in a home or facilities of the purchaser or in facilities of the producer, but the input/display computer may be connected to the communication network 3 independently from those client systems. In this case, in order to prevent the unauthorized access, the server may be configured such that the server system never fails to request the point-of-sale retailer, the purchaser or the producer for inputting its ID and password that are separately issued by the server system as well as the order identifier or the summary identifier.

According to the present invention, as has been described hereinbefore, the purchase data acquiring/utilizing system includes a client system installed at least at a point-of-sale retailer in the case where a commodity is sold to a customer or on the customer side in the case where the commodity is sold on a non-store retailing basis; and a server system for receiving purchase data on the commodity together with a purchase header for identifying attributes with respect to the purchase data, from the client system via a communication network, the server system comprising: an attribute database system for saving in advance with details of attributes corresponding to the purchase header; a purchase data storage region for storing the purchase data and the purchase header output from the client system; a purchase data analyzing system for performing a desired kind of analysis on the basis of the data registered in the attribute database system and the data stored in the purchase data storage region and for generating an order identifier corresponding to each desired analysis result; and an analysis result storage region for storing the analysis result in a predetermined file format; wherein the server system individually notifies the client system or a display computer connected to the communication network of an order identifier corresponding to the each desired analysis result, thereby authorizing an access to the analysis result. Accordingly, the point-of-sale retailer can easily and promptly acquire the detailed analysis result particular to the point-of-sale retailer from the server system so that the analysis results can be sufficiently exploited for planning and executing its customer marketing strategy and for grasping the results thereof. Similaly, the producer having dealings with a number of points-of-sale retailers can acquire the detailed analysis results particular to the respective point-of-sale retailers so that the analysis results can be sufficiently exploited for planning and executing not only the customer marketing strategy but also the commodity distribution strategy and for grasping the results thereof.

Further, according to the purchase data acquiring/utilizing system of the present invention, the server system further comprises : a related data counting system for count data accumulated on a specific customer for a predetermined time period under desired conditions for collection on the basis of the data stored in the purchase data storage region to convert the counted data into points, and further generating a summary identifier corresponding to each desired counting result; and a count result storage region for storing the counting result converted into the points; wherein the server system individually notifies the client system or the display computer connected to the communication network of the summary identifier corresponding to the each desired counting result, thereby authorizing an access to the counting result. As to the point-of-sale retailer, the counting result can be utilized for highly value-added services to bring about the commodity purchasing inclination of the customer. Additionally, as to the purchaser, the acquired counting result can be exploited as the basic data for utilizing the point redeem services provided at retail shops or through the Net shopping.

The preferred embodiment of the present invention has been disclosed by way of example and it will be understood that other modifications may occur to those skilled in the art without departing from the scope and the spirit of the appended claims.

The features disclosed in the foregoing description, in the claims and/or in the accompanying drawings may, both separately and in any combination thereof, be material for realising the invention in diverse forms thereof.

## Claims

1. A purchase data acquiring/utilizing system including a client system installed at least at a point-of-sale retailer in the case where a commodity is sold to a customer or on the customer side in the case where the commodity is sold on a non-store retailing basis; and a server system for receiving purchase data on the commodity together with a purchase header for identifying attributes with respect to the purchase data, from said client system via a communication network, said server system comprising :
an attribute database system for saving in advance with details of attributes corresponding to said purchase header;
a purchase data storage region for storing said purchase data and said purchase header output from said client system;
a purchase data analyzing system for performing a desired kind of analysis on the basis of the data registered in said attribute database system and the data stored in said purchase data storage region and for generating an order identifier corresponding to each desired analysis result; and
an analysis result storage region for storing the analysis result in a predetermined file format;
wherein said server system individually notifies the client system or a display computer connected to said communication network of an order identifier corresponding to said each desired analysis result, thereby authorizing an access to said analysis result.

2. The purchase data acquiring/utilizing system according to claim 1, wherein said purchase data are data relating to purchase time, purchase quantity and/or purchase price of the commodity; said purchase header is a header for identifying point-of-sale attributes, purchaser attributes and purchase item attributes; details of the point-of-sale attributes, details of the purchaser attributes and details of the purchase item attributes corresponding to said purchase header are saved in said attribute database system.

3. The purchase data acquiring/utilizing system according to claim 1, wherein said server system further comprises:
a related data counting system for count data accumulated on a specific customer for a predetermined time period under desired conditions for collection on the basis of the data stored in said purchase data storage region to convert the counted data into points, and further generating a summary identifier corresponding to each desired counting result; and
a count result storage region for storing the counting result converted into the points;
wherein said server system individually notifies said client system or the display computer connected to said communication network of said summary identifier corresponding to said each desired counting result, thereby authorizing an access to said counting result.

4. The purchase data acquiring/utilizing system according to claim 3, wherein said accumulated data are data which are collected on the basis of any of a purchase sum of money, a purchase result at a specific point-of-sale retailer and a purchase quantity of specific items on the specific purchaser for a predetermined time period.

5. The purchase data acquiring/utilizing system according to claim 1, wherein said client system or said display computer transmits data of a desired analysis condition arbitrarily input by a user to said server system; and said server system performs a desired analysis under the analysis condition received.

6. The purchase data acquiring/utilizing system according to claim 3, wherein said client system or said display computer transmits data of a desired counting condition which are arbitrarily input by a user to said server system; and said server system performs a desired count under the counting condition received.
